# EUROPÄISCHE PATENTSCHRIFT

(11) **EP 2 295 862 B1**
(45) Veröffentlichungstag und Bekanntmachung des Hinweises auf die Patenterteilung: **02.08.2017**
(21) Anmeldenummer: 10008416.9
(22) Anmeldetag: 12.08.2010
(51) Int. Cl.: F23L 15/04, F24H 9/00

(54) **Kombinierte Luftzufuhr- und Abgasführung eines Heizgerätes**
Combined air supply and flue gas conduit of a heating apparatus
Conduit combiné d'air de combustion et de fumées d'un appreil de chauffe

(30) Priorität: 21.08.2009 AT 13222009
(43) Veröffentlichungstag der Anmeldung: 16.03.2011
(73) Patentinhaber: Vaillant GmbH, 42859 Remscheid (DE)
(72) Erfinder: Rebien, Karsten, 42489 Wülfrath (DE); Thum, Lars, 40724 Hilden (DE)
(74) Vertreter: Hocker, Thomas

(56) Entgegenhaltungen:
- EP-A1- 0 793 063
- WO-A1-02/33316
- WO-A2-2007/106669
- FR-A1- 2 554 565
- US-A- 5 178 124

## Beschreibung

Die Erfindung bezieht sich auf eine kombinierte Luftzufuhr und Abgasführung eines Heizgerätes, vorzugsweise eines Brennwertgerätes.

Brenngasbetriebene Heizgeräte verfügen u. a. über eine Abgasleitung, über die das Verbrennungsabgas in die Umgebung geführt wird. das Heizgerät wird hierbei zumeist mit genormten Abgasleitungen verbunden. Innerhalb des Heizgerätes besteht hinsichtlich der Abgasführung Gestaltungsfreiheit.

Ferner verfügen brenngasbeheizte Heizgeräte häufig über eine interne Luftansaugleitung, die u. a. zur Vermeidung selbsterregter Verbrennungsschwingungen dient.

Aus WO 20/33316 A1 ist ein Heizgerät bekannt, bei dem die Luftansaugleitung um die Wärmezelle eines Heizgerätes führt und somit Abwärme aufnehmen kann.

EP 793063 A1 zeigt ein Heizgerät, bei dem die Abgase in einen nachgeschalteten Wärmetauscher geleitet werden, wo sie Wärme auf die Frischluft des Brenners abgibt.

FR 2554565 A1 offenbart ein Heizgerät mit einer sogenannten Unterdruckkammer. Darunter versteht man ein Gehäuse, in das die Frischluft für den Brenner des Heizgeräts geleitete wird, bevor sie zum Verbrennungsgebläse gelangt. Bei Unterdruckkammern kann jedoch nicht gewährleistet werden, dass auch die komplette Wärmezelle umspült wird. Vielmehr verbleiben Totwassergebiete unberührt.

Der Erfindung liegt die Aufgabe zugrunde, einen kompakten Aufbau des Heizgerätes zu ermöglichen und zugleich Abstrahlverluste des Heizgerätes sowie Wärmeverluste über das Abgas zu minimieren.

Dies wird gemäß den Merkmalen des Kennzeichens des unabhängigen Anspruchs 1 gelöst. Es ist vorgesehen, dass zumindest die Luftansaugleitung aus einem zumindest zweiteiligen Formteil, vorzugsweise Kunststoffspritzgussteil hergestellt wird. Diese Teile werden zumindest in dem Bereich, in dem die Luftansaugleitung und Abgasleitung und / oder Wärmezelle einander umschließen, miteinander verklebt oder verschweißt, wobei als Schweißverfahren vorzugsweise das Reibschweißverfahren zur Anwendung kommt. Hierbei greifen die Teile über ein Nut-Feder-System ineinander ein.

Vorteilhafte Ausgestaltungen der Erfindung ergeben sich durch die Merkmale der abhängigen Ansprüche.

Ist die Luftansaugleitung spiral- oder mäanderförmig um die Abgasleitung beziehungsweise Wärmezelle gewunden, so kann hierdurch die Rohrlänge in der Ansaugleitung entsprechend verlängert werden. Dies ermöglicht eine akustische Verstimmung des Systems und stellt sicher, dass viel Fläche gezielt umströmt werden kann.

Auch ein Schaumstoffdämpfer in der Luftansaugleitung kann zur Unterdrückung selbsterregter Verbrennungsschwingungen und von Strömungsgeräuschen dienen.

Die Erfindung wird nun anhand der Figuren detailliert erläutert. Hierbei zeigen
Figur 1 ein erfindungsgemäßes Heizgerät mit umströmtem Abgasrohr,
Figur 2 die kombinierte Luftansaug- und Abgasleitung in einer Explosionszeichnung,
Figur 3 die kombinierte Luftansaug- und Abgasleitung geschlossen sowie
Figur 4 eine Variante des erfindungsgemäßen Heizgerätes mit umströmter Wärmezelle.

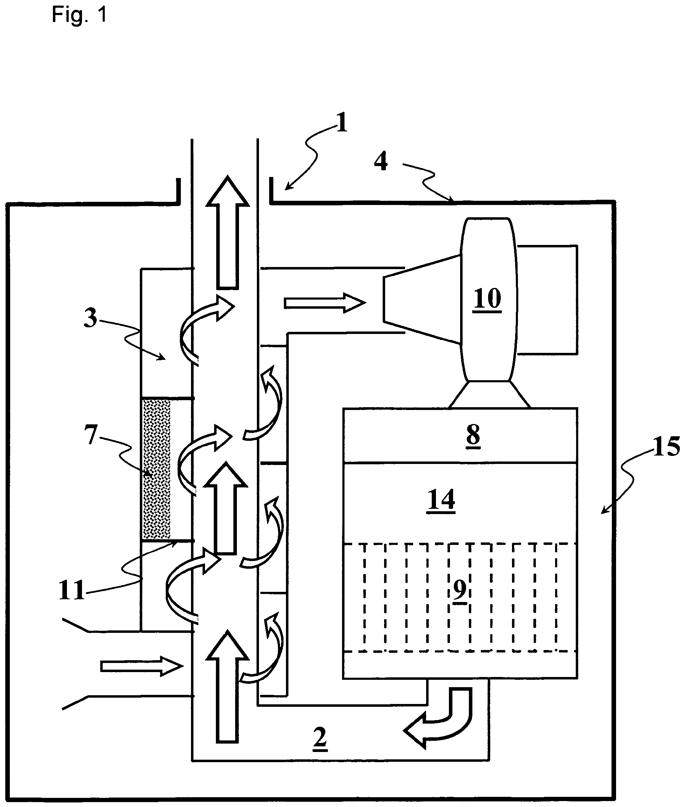

Figur 1 zeigt ein Heizgerät 1 mit einem Gehäuse 4, in dem sich ein Brenner 8 mit Wärmetauscher 9 sowie Gebläse 10 befinden. Der Brenner 8 und der Wärmetauscher 9 bilden zusammen mit der Brennkammer 14, die sich zwischen dem Brenner 8 und dem Wärmetauscher 9 befindet, eine Wärmezelle 15. An den Wärmetauscher 9 schließt sich die Abgasleitung 2 an. Die Luftansaugleitung 3 verbindet das Innere des Gehäuses 4 mit dem Gebläse 10. Hierbei umschließt die Luftansaugleitung 3 in einem Teilbereich die Abgasleitung 2. Zwischenwände 11 sorgen dafür, dass die Luftansaugleitung 3 mäanderförmig um die Abgasleitung 2 geführt wird. Die Führung könnte alternativ auch spiralförmig erfolgen. Ein Schaumstoffdämpfer 7 ist in der Luftansaugleitung 3 angeordnet.

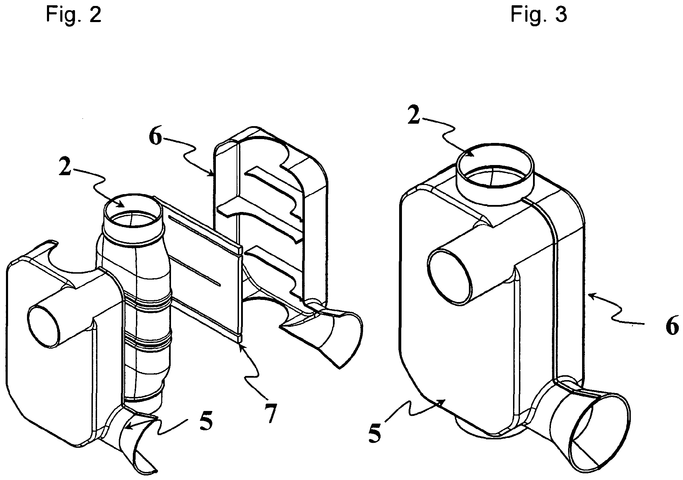

Die Figuren 2 und 3 zeigen detailliert die kombinierte Abgas- und Luftansaugleitung 2, 3, welche aus mehreren Kunststoffspritzgussteilen 5, 6 hergestellt ist. Die Abgasleitung 2 kann als mehrteiliges Kunststoffspritzgussteil oder zumindest in Teilbereich als Strangpressprofil hergestellt werden. Die Luftansaugleitung 3 besteht aus mehreren Kunststoffspritzgussteile. Die Kunststoffspritzgussteile 5, 6 verfügen über korrespondierende Nuten und Federn, welche ineinander eingreifen und somit geschlossene Leitungen 2, 3 schaffen.

Diese kombinierte Abgas- und Luftansaugleitung ermöglicht einerseits eine sehr kompakte Bauweise. Andererseits wird sehr frühzeitig Wärme von der Abgasleitung 2 auf die Luftansaugleitung 3 übertragen, so dass die Wärmestrahlung der Abgasleitung 2 in das Gehäuse 4 reduziert wird, was die Wärmeverluste des gesamten Gerätes minimiert. Ferner ist die Eintrittstemperatur des Abgases in die externe Abgasleitung geringer, so dass auch hier nochmals eine Reduzierung der Wärmeverluste erreicht wird.

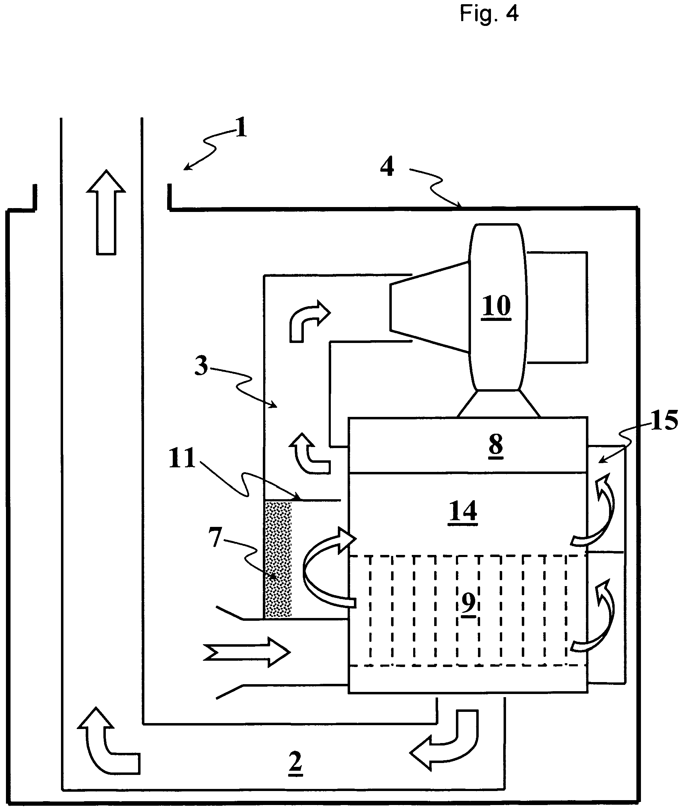

Figur 4 zeigt eine Variante des erfindungsgemäßen Heizgeräts 1. Die Luftansaugleitung 3 umschließt die Wärmezelle 15 in einem Teilbereich die Abgasleitung 2. Zwischenwände 11 sorgen auch hier dafür, dass die Luftansaugleitung 3 mäanderförmig um die Wärmezelle geführt wird. in Schaumstoffdämpfer 7 ist in der Luftansaugleitung 3 angeordnet.

Die Luftansaugleitung 3 kann erfindungsgemäß entweder die Abgasleitung 2 oder die Wärmezelle 15 oder auch beide teilweise umschließen.

## Patentansprüche

1. Heizgerät (1) mit einer Wärmezelle (15), welche aus einem Brenner (8), einer Brennkammer (14) und einem Wärmetauscher (9) gebildet wird und diese verbindet, einem Gehäuse (4), einer internen Abgasleitung (2) und einer internen Luftansaugleitung (3), wobei die Luftansaugleitung (3) im Gehäuse (4) die Abgasleitung (2) und / oder die Wärmezelle (15) teilweise umschließt,
**dadurch gekennzeichnet, dass** zumindest die Luftansaugleitung (3) aus einem mehrteiligen Formteil, vorzugsweise Kunststoffspritzgussteil (5, 6) hergestellt wird, wobei zumindest die einander umschließenden Formteile (5, 6) miteinander verklebt oder verschweißt, vorzugsweise reibgeschweißt werden und die beiden Formteile (5, 6) über ein Nut-Feder-System ineinander eingreifen.

2. Heizgerät (1) nach Anspruch 1, **dadurch gekennzeichnet, dass** die Luftansaugleitung (3) spiral- oder mäanderförmig um die Abgasleitung (2) und / oder die Wärmezelle (15) führt.

3. Heizgerät (1) nach einem der Ansprüche 1 oder 2, **dadurch gekennzeichnet, dass** in der Luftansaugleitung (3) ein Dämpfungselement, vorzugsweise ein Schaumstoffdämpfer (7) angeordnet ist.

## Claims

1. Heating device (1) with a heating cell (15), which is formed of and connects a burner (8), a combustion chamber (14) and a heat exchanger (9), a housing (4), an internal exhaust pipe (2) and an internal air intake line (3), wherein the air intake line (3) in the housing (4) partially encloses the exhaust pipe (2) and/or the heating cell (15), **characterised in that** at least the air intake line (3) is made of a multi-piece moulded part, preferably a plastic injection-moulded part (5, 6), wherein at least the moulded parts (5, 6) enclosing each other are bonded or welded, preferably friction welded, and the two moulded parts (5, 6) engage via a groove-spring system.

2. Heating device (1) according to claim 1, **characterised in that** the air intake line (3) extends helically or in a meander-shape around the exhaust pipe (2) and/or the heating cell (15).

3. Heating device (1) according to any of claims 1 or 2, **characterised in that** a damping element, preferably a foam damper (7), is arranged in the air intake line (3).

## Revendications

1. Appareil de chauffage (1) avec une cellule de chaleur (15), laquelle est constituée d'un brûleur (8), d'une chambre de combustion (14) et d'un échangeur de chaleur (9) et relie ceux-ci, avec une carrosserie (4), avec une conduite de gaz d'échappement (2) interne et avec une conduite d'aspiration d'air (3) interne, la conduite d'aspiration d'air (3) dans la carrosserie (4) entourant partiellement la conduite de gaz d'échappement (2) et/ou la cellule de chaleur (15),
**caractérisé en ce qu'**au moins la conduite d'aspiration d'air (3) est fabriquée à partir d'une pièce moulée en plusieurs parties, de préférence une pièce en plastique moulée par injection (5, 6), au moins les pièces moulées (5, 6) enveloppantes étant collées ou soudées l'une à l'autre, de préférence soudées par friction, et les deux pièces moulées (5, 6) s'imbriquant l'une dans l'autre par l'intermédiaire d'un système de rainure et languette.

2. Appareil de chauffage (1) selon la revendication 1, **caractérisé en ce que** la conduite d'aspiration d'air (3) passe en forme de spirale ou de méandre autour de la conduite de gaz d'échappement (2) et/ou de la cellule de chaleur (15).

3. Appareil de chauffage (1) selon l'une des revendications 1 ou 2, **caractérisé en ce qu'**un élément amortisseur, de préférence un amortisseur en mousse (7), est agencé dans la conduite d'aspiration d'air (3).
